# EUROPEAN PATENT APPLICATION

(11) **EP 2 045 970 A1**
(43) Date of publication of application: **08.04.2009**
(21) Application number: 07447055.0
(22) Date of filing: 05.10.2007
(51) Int. Cl.: H04L 12/28, H04L 12/56

(54) **Coexistence of wireless personal area network and wireless local area network**

(71) Applicant: STMicroelectronics Belgium N.V., 1930 Zaventem (BE)
(72) Inventor: Alexandre, Rudolph, B-1210 Saint-Josse-ten-Noode (BE); Aerts, Wouter, B-2800 Mechelen (BE); Ryder, Martin, Berkshire RG8 8TA Reading (GB)
(74) Representative: Bird, William Edward

(57) **Abstract**

Wireless transceiver apparatus is described for operating in a part of the RF spectrum in which a first wireless transceiver apparatus shares with a co-located second wireless transceiver apparatus.

The first wireless transceiver apparatus comprises:
a wireless transceiver unit;
an arbitration interface for interfacing with an arbitration entity which arbitrates access to the shared part of the RF spectrum between the first wireless transceiver apparatus and the second wireless transceiver apparatus;

wherein the arbitration interface is adapted to signal time periods when the wireless transceiver unit is operational, or requests to be operational;
and wherein the arbitration interface is adapted to signal data about the first wireless transceiver apparatus during other time periods.

## Description

### FIELD OF THE INVENTION

This invention relates to a methods for receiving and transmitting, to transceiver apparatus for operation in a part of the RF spectrum which is shared with a second wireless transceiver apparatus, to a controller for controlling a receiver as well as to software and computer program products to implement the methods.

### BACKGROUND TO THE INVENTION

One band of the RF spectrum which is being increasingly used for wireless communications is the unlicensed Industrial Scientific & Medical (ISM) band at 2.4GHz. Wireless Local Area Network (WLAN) technology, which is standardised in IEEE 802.11, operates in the ISM band. One variant of IEEE 802.11 uses a frequency-hopping spread spectrum (FHSS) technique with 1 MHz channel separation and pseudorandom hops across 79 channels. Another variant (IEEE 802.11b) uses direct sequence spread spectrum (DSSS) techniques, with 22 MHz channels. WLAN technology is widely used in offices, homes and public places to support networking between users. Wireless Personal Area Network (WPAN) technology, which is standardised in IEEE 802.15.1, is another technology which operates in the ISM band. This is a 1 Mbit/s FHSS system which uses the same 79, 1 MHz-wide channels that are used by the FHSS version of IEEE 802.11. IEEE 802.15.1 hops pseudorandomly at a nominal rate of 1600 hops/second. IEEE 802.15.1 is intended as a low power, short range (<3m) technology for interconnecting devices such as mobile phones, portable computers and wireless handsfree headsets with fixed devices or other portable devices. One commercial implementation of IEE 802.15.1 is known as Bluetooth™.

Since both IEEE 802.11 and IEEE 802.15.1 operate in the same 2.4 GHz unlicensed ISM frequency band, there is mutual interference between the two wireless systems which may result in severe performance degradation. The interference is of most concern with IEEE 802.11b as this uses a static channel (i.e. no frequency hopping). Factors which determine the level of interference include the separation between the WLAN and WPAN devices, the amount of data traffic flowing over each of the two wireless networks, the power levels of the various devices, and the data rate of the WLAN. Also, different types of information being sent over the wireless networks have different levels of sensitivity to the interference. For example, a voice link may be more sensitive to interference than a data link being used to transfer a data file.

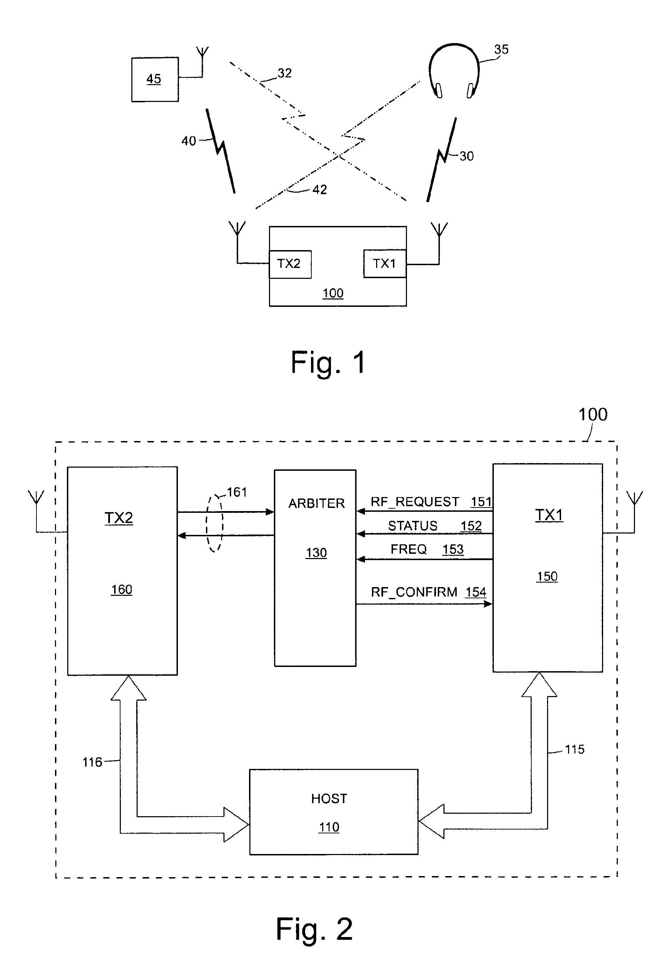

IEEE 802.15.2-2003 "Telecommunications and Information exchange between systems - Local and metropolitan area networks Specific Requirements - Part 15.2: Coexistence of Wireless Personal Area Networks with Other Wireless Devices Operating in Unlicensed Frequency Bands." describes the interference problem and provides some guidance for how WLAN and WPAN equipment can coexist. Two categories of coexistence mechanisms are proposed: collaborative and non-collaborative. Collaborative coexistence mechanisms exchange information between two wireless networks. Figure 1 shows an example piece of equipment 100 which includes a WPAN transceiver TX1 and a WLAN transceiver TX2. Equipment 100 can be, for example, a portable computer with the WLAN supporting a connection 40 with a WLAN base station 45 and the WPAN supporting a connection 30 with a WPAN device which, in this example, is a wireless headset 35. Some of the possible sources of interference are shown: WLAN transmissions from BS 45 may interfere with reception of WPAN traffic at TX1, or WPAN transmissions from TX1 may interfere with WLAN reception at the base station 45 (path 32); WPAN transmissions from head set 35 may interfere with reception of WLAN traffic at TX2, or WLAN transmissions from TX2 may interfere with WPAN reception at the head set 35 (path 42).

One solution proposed by IEEE 802.15.2 is to provide a packet traffic arbitration (PTA) arbitration device which communicates with both the WLAN station and WPAN station and provides per-packet authorisation of all transmissions. Figure 2 shows an apparatus 100 with an arbitration device 130. Both transceivers TX1, TX2 must request permission to transmit or receive and, in response, the arbitration device 130 will either grant or deny the permission to access the shared spectrum to transmit or receive a data packet. The recommended PTA interface between a WPAN transceiver and an arbitration device is shown in Figure 2. It comprises four lines 151-154: RF_Request, Status, Freq and RF_Confirm.

There are limitations to the effectiveness of the existing PTA arrangement. One limitation is that the PTA arbitration device performs arbitration based on a limited amount of information, such as the priority of each station's request. It would be desirable to convey additional information between a WPAN station and a WLAN station (or an arbitrating entity), but providing additional signalling lines would increase the pin count of integrated circuits used in the WPAN and WLAN stations.

### SUMMARY OF THE INVENTION

The present invention seeks to provide a way of improving the operation of a wireless device in a shared environment.

A first aspect of the present invention provides a first wireless transceiver apparatus for operating in a part of the RF spectrum which is shared with a co-located second wireless transceiver apparatus, the first wireless transceiver apparatus comprising:
a wireless transceiver unit;
an arbitration interface for interfacing with an arbitration entity which arbitrates access to the shared part of the RF spectrum between the first wireless transceiver apparatus and the second wireless transceiver apparatus;
   wherein the arbitration interface is used to signal time periods when the wireless transceiver unit is operational, or requests to be operational;
   and wherein the arbitration interface is used to signal data about the first wireless transceiver apparatus during other time periods.

In an embodiment the interface is in the form of a bus (PTA bus) that can be used to convey data between the first and second wireless transceiver apparatus.

It has been realised that the existing interface with the arbitration entity (e.g. the PTA entity defined by IEEE 802.15.2) has spare capacity which could be used to carry additional data. One advantage is that this can avoid the need to provide further lines to carry this data which, in turn, avoids the need to provide additional pins on an integrated circuit, or other hardware apparatus although the present invention is not limited thereto. The arbitration interface may comprise two arbitration interfacing means for interfacing with an arbitration entity which arbitrates access to the shared part of the RF spectrum between the first wireless transceiver apparatus and the second wireless transceiver apparatus; wherein a first arbitration interfacing means is adapted to signal time periods when the wireless transceiver unit is operational, or requests to be operational; and wherein a second arbitration interfacing means is adapted to signal data about the first wireless transceiver apparatus during other time periods.
Advantageously, a sub-set of the lines of the arbitration interface are used to implement a serial interface for signalling the data during said other time periods although parallel interfaces may be used with the present invention.

Advantageously, the data comprises at least one of: state of a wireless link; packet type sent over a wireless link; power; SNR; Frequency Hopping Scheme; maximum power on an antenna of the transceiver; ISM noise. The arbitration entity can use this data to make a better-informed decision as to which transceiver apparatus should be granted permission to operate at any time.

Conventionally, an arbiter decides whether to allow - or deny - a request on a perrequest basis, based on the priority of the request. However, in situations where the first wireless transceiver apparatus supports multiple simultaneous wireless links, this can result in some of the links receiving an unfair proportion of their access requests denied. A further embodiment of the present invention provides the arbiter with an identity of the wireless link for which the request is being made. This can help to ensure that the arbiter more fairly distributes access to the shared RF band among the plurality of links. Each of the plurality of wireless links can be voice, data or control information.

The first wireless transceiver apparatus can be a Wireless Personal Area Network (WPAN) apparatus, such as an IEEE 802.15.1 (Bluetooth™) apparatus, and the second wireless transceiver apparatus can be a Wireless Local Area Network (WLAN) apparatus, such as one conforming to IEEE 802.11. The first wireless transceiver apparatus and the second wireless transceiver apparatus can be co-located with each other, and co-located with the arbitration entity. The term "co-located" means that the antennas of the respective transceiver apparatuses are less than 1m apart, e.g. at the same location or tens of mm or cm apart. Optionally, the first wireless transceiver apparatus, the second wireless transceiver apparatus and the arbitration entity are all housed within one device, such as a portable computer, mobile telephone, media player or other electronic apparatus which requires two transceivers. The antennas may be on a single printed circuit board or electronic card, e.g. with a few mm or cm of each other. The first and second wireless transceiver apparatus can share the same antenna.

The arbitration entity can reside on a first integrated circuit which forms part of the Wireless Local Area Network (WLAN) apparatus. The Wireless Personal Area Network (WPAN) apparatus can be implemented as a second integrated circuit which connects to the first integrated circuit via a multi-lined arbitration interface. Alternatively, the arbitration entity, Wireless Local Area Network (WLAN) apparatus and Wireless Personal Area Network (WPAN) apparatus can be implemented as a single integrated circuit, with a multi-lined arbitration interface being used to internally connect hardware modules which implement the arbitration entity and the Wireless Personal Area Network (WPAN) apparatus within the integrated circuit.

A further aspect of the present invention provides a method of operating a first wireless transceiver apparatus for operating in a part of the RF spectrum which is shared with a co-located second wireless transceiver apparatus, the method comprising: arbitrating access to the shared part of the RF spectrum between the first wireless transceiver apparatus and the second wireless transceiver apparatus; signalling time periods when the wireless transceiver unit is operational, or requests to be operational; and signalling data about the first wireless transceiver apparatus during other time periods.

A further aspect of the present invention provides an arbitration entity for arbitrating access to RF spectrum which is shared between a first wireless transceiver apparatus and a second wireless transceiver apparatus which is co-located with the first wireless transceiver apparatus, the arbitration entity comprising: an arbitration interface for interfacing with the first wireless transceiver apparatus and the second wireless transceiver apparatus; wherein the arbitration interface is used to signal time periods when a wireless transceiver unit of one of the wireless transceivers is operational, or requests to be operational, and wherein the arbitration interface is used to signal data about the first wireless transceiver apparatus or the second wireless transceiver apparatus during other time periods.

Advantageously, the first wireless transceiver apparatus is capable of supporting a plurality of different wireless links and at least some items of the data received over the arbitration interface are each associated with an identifier of one of the wireless links. The arbitration entity is arranged to store the data and to use the data to arbitrate requests for accessing the shared RF spectrum.

The functionality described here can be implemented in software, hardware or a combination of these. Accordingly, another aspect of the invention provides software for performing the method when executed by a processor. The software may be installed on the transceiver apparatus at the time of manufacture, or it may be installed onto an existing transceiver apparatus at a later date as an upgrade. The software may be stored on an electronic memory device, hard disk, optical disk or other machine-readable storage medium. The software may be delivered as a computer program product on a machine-readable carrier or it may be downloaded to the transceiver apparatus via a network connection.

### BRIEF DESCRIPTION OF THE DRAWINGS

Embodiments of the invention will be described with reference to the accompanying drawings in which:
Figure 1 shows an apparatus with two co-located wireless transceivers operating in the same RF band;
Figure 2 shows the apparatus of Figure 1 with an arbitration unit for co-ordinating access to the common RF band;
Figure 3 shows the first wireless transceivers in more detail;
Figure 4 shows the arbitration unit in more detail;
Figure 5 shows a scheme for signalling Link ID in accordance with an embodiment of the present invention;
Figure 6 shows an alternative scheme for signalling Link ID in accordance with an embodiment of the present invention;
Figure 7 shows an example of use made of the arbitration interface over a period of time in accordance with an embodiment of the present invention; and

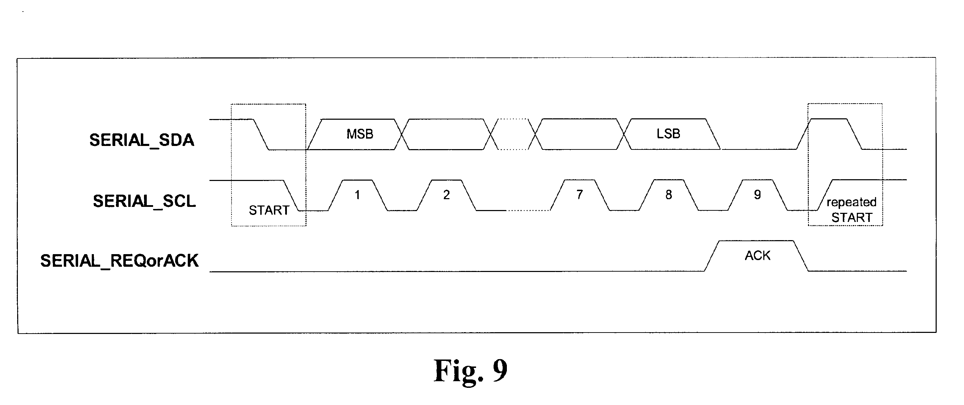

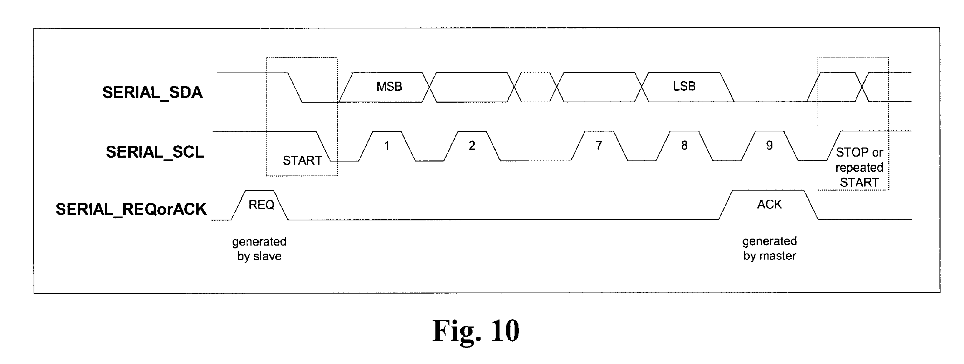

Figures 8 to 10 show details of the signalling scheme used on the lines of the arbitration interface in accordance with an embodiment of the present invention.
Figures 11 and 12 show adjacent first and second wireless transceivers in accordance with an embodiment of the present invention nad how quasi-static or real time data is transferred.

### DESCRIPTION OF PREFERRED EMBODIMENTS

The present invention will now be described with reference to certain embodiments and with reference to the above mentioned drawings. Such description is by way of example only and the invention is not limited thereto. In particular the present invention will be described with reference to radio communications network but the present invention is not limited thereto. The term "wireless" should be interpreted widely to cover any communications system which does not use fix wireline communications for some of its transmissions. Alternative wireless communications systems include optical systems such as those operating with diffuse infra-red. It should also be noted that the term "wireless" also includes so-called cordless systems. General aspects of cordless communications systems are described for instance in the book by W. Tuttlebee, "Cordless Telecommunications Worldwide", Springer, 1997. Cordless systems are generally local, uncoordinated radio communications networks having a limited range.

Referring again to Figure 2, this shows an apparatus in which a transceiver TX1 of a first wireless system, e.g. a WPAN, such as a WPAN based on a IEEE 802.15.1 protocol, e.g. Bluetooth, and a transceiver TX2 of a second wireless system, e.g. a WLAN, such as a WLAN based on IEEE 802.11b, are co-located with one another at an apparatus 100 as can be used with the present invention. An arbitration device 130 communicates with TX1 via an interface 151-154 and with TX2 via a similar interface. For example, the interface may be a four-lined interface (shown simply as interface 161). The interface between the WPAN transceiver TX1 and the arbiter 130 comprises four lines 151-154. TX1 uses line 151 (TX_REQUEST) to request access the shared RF band. The priority of the request is indicated by setting line 152 (STATUS) high (high priority) or low (low priority) at a similar time to making the request. The Frequency line 153 (FREQ) is an optional line, and can be used to indicate that TX1 intends to 'hop' into one of the restricted (shared) channels during the next transmission/reception slot.

The arbiter 130 uses line 154 (TX CONFIRM) to indicate whether TX1 is allowed to operate in the next slot. If TX1 is not allowed to operate, it must not transmit during the next slot.

In a similar manner to TX1, TX2 of the WLAN uses the same type of interface 161 to indicate when it wishes to access the shared RF band and receives a signal indicating permission or denial to transmit from the arbiter 130.

Each attempt to transmit by either TX1 or TX2 is submitted to the arbiter 130 for approval. The arbiter 130 may deny a transmit request that would result in a collision. The arbiter 130 provides a permission/denial signal to both TX1 and TX2 on a per packet/slot basis. When a collision would occur, the arbiter 130 prioritises transmissions of TX1 and TX2 based on the priorities of the transmissions that it receives on line 152 and interface 161.

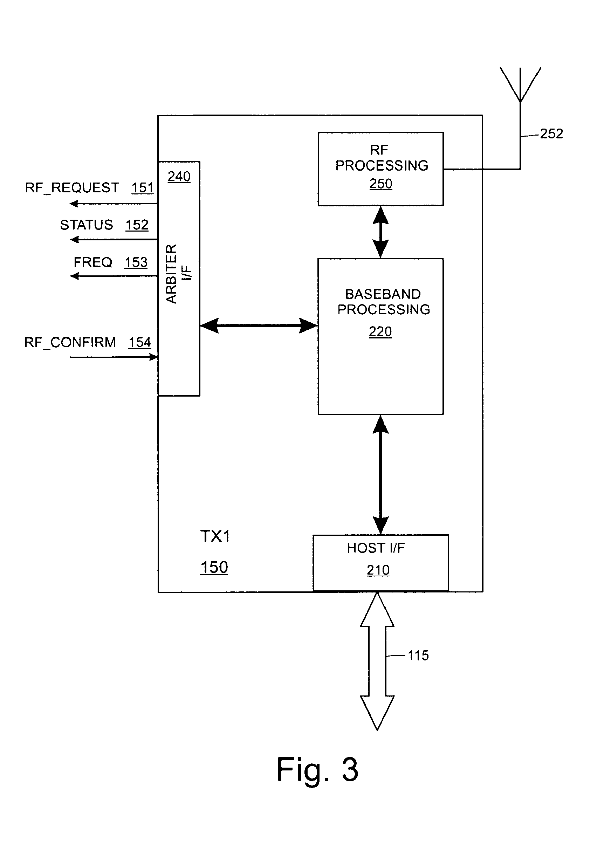

Figure 3 shows transceiver TX1 in more detail. An interface 210 communicates 115 with a host 110. The host can provide the data which is to be transmitted by the transceiver TX1, such as voice data or data for a file transfer. A baseband processing unit 220 packetises the data, if necessary, and issues transmission requests which are sent to the arbiter interface unit 240 for transmission along lines 151-153. A permission/denial signal is received from interface unit 240. An RF processing unit 250 performs modulation to RF for transmission via antenna 252. As noted above, TX1 can support multiple (e.g. 7) simultaneous connections, called links. As an example, one link may carry voice data between unit 100 and handsfree headset 35, while another link may carry data between unit 100 and another portable device. Bluetooth defines a number of different types of link, including Synchronous Connection-oriented (SCO) links which carry constant bit rate data, such as voice data, and Asynchronous Connection-oriented (ACL) links which carry data or control data (ACL-C). SCO links generate a series of packets at regular time intervals whereas ACL links generate packets at irregular time intervals. Conventionally, the PTA interface has a two-level priority scheme (priority = 0 or priority = 1).

The PTA algorithm is only active when TX1 asserts the RF_REQUEST signal. In accordance with an embodiment of the present invention, a sub-set of the lines of the existing PTA interface - i.e. the lines STATUS, FREQ and RF_CONFIRM - are used as a serial interface to serially transfer additional information from TX1 to the arbiter 130. The present invention is not limited to serial interfaces, e.g. parallel interfaces may be used. The serial interface can be used whenever the RF_REQUEST line is not asserted (RF_REQUEST line is low). This additional information can comprise one or more of the following:
- state of a BT link, e.g. active, sleep, deep sleep;
- packet types;
- Master or Slave (M/S);
- Intervals;
- Power and SNR
- Frequency Hopping Scheme, and details of the scheme, e.g. channels used in the scheme;

The above list is not exhaustive, and it will be understood that other parameters can be communicated over the serial interface (or parallel interface). Some of the parameters will depend on the particular type of link that the parameter is measured for and this may depend upon the protocol used, e.g. a Bluetooth link or other. When communicating the additional information, it will be indicated for which of the links this additional information is applicable.

The serial (or parallel) interface can be driven by software. The advantage is the flexibility in the kind of information that can be exchanged and thus on the use that is made of it. Software allows upgrades and improvements to be implemented, e.g. if reprogrammable components are used. However, other interfaces may be used, e.g. hardware interfaces.

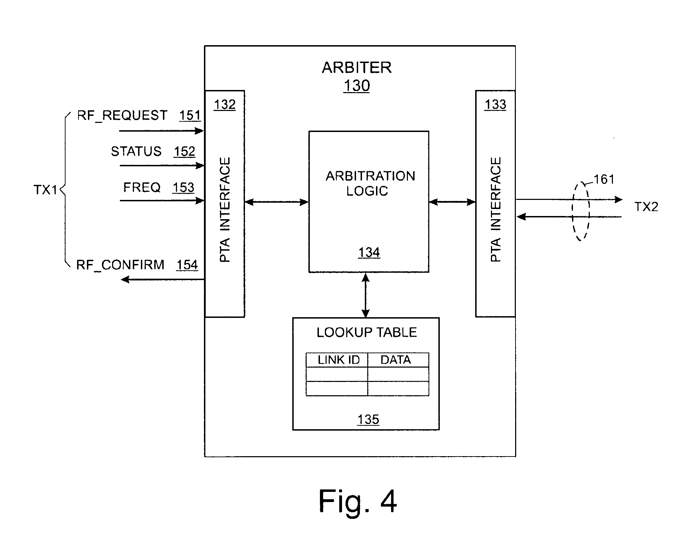

Figure 4 shows arbiter 130 in more detail. A PTA interface part 132 connects to the RF_REQUEST, STATUS, FREQ, and RF_CONFIRM lines of the PTA interface to TX1. Similarly, a PTA interface part 133 connects to the lines of a PTA interface 161 to TX2. Arbitration logic 134 receives requests to access the shared RF spectrum from TX1 (via lines 151-154) and TX2 (via interface 161) and grants permission to one of the transceivers TX1, TX2 at any time. Arbiter 130 stores the additional information received about BT links in a lookup table 135. One advantageous embodiment of this table is a lookup table which is indexed by the BT link ID. Data relevant to a particular BT link is stored alongside the BT Link ID for that link. Upon receiving a request, the arbiter checks the lookup table 135 to find the characteristics of the BT link associated with the request. As an example, consider that TX1 simultaneously supports a first BT link which is used for voice transfer and a second BT link which is used for data transfer. Both links have the same PTA priority level. TX1 submits requests to access the shared RF spectrum on behalf of both links. Conventionally, the arbiter 130 would see two requests having the same priority level. However, in accordance with the present invention, the arbiter 130 also receives an identifier of the link. This can be used to lookup details of the link, to help the arbiter make a better decision about which link should be granted access to the spectrum. Arbiter can also maintain a log of which links have been granted access, and can use this to grant or deny future requests.

The one wireless apparatus, e.g. TX1 always has to request medium access from the other wireless apparatus, e.g. TX2. The additional on-chip serial interface provides additional link information to the PTA algorithm coming from the BT apparatus. The information on the link ID is then most useful for the arbitration. The information provided to the arbiter about the link may be used by the arbiter in various ways. For instance by maintaining a log of the usage of each link, a fairer protocol may be employed, e.g. avoiding that just one link obtains the majority of use. Also priorities may be set for each link separately and the arbiter may decide on a link-by-link basis using the priority. With the serial link, the WLAN can make a finer priority handling.The above embodiment provides an advantage that real-time link identification is added to the PTA interface to allow the PTA algorithm to associate a particular BT request to its link information. Priority information can be provided by the WLAN sub-system. Feedback to the WLAN sub-system allows for smarter scheduling to fit in between BT transmissions. The arbiter is aware of available retransmissions and can grant them such that the free time for the WLAN transactions is high, e.g. 5ms, hence providing a better WLAN service. For example, when the WLAN knows that a BT periodic SCO is ongoing, it can take the periodicity of the BT into account and schedule its TX better such that the WLAN TX falls in the quiet periods of the BT. An additional advantage is that commands can be sent over the serial interface.

The conventional protocol for submitting a request for RF access over the PTA interface will now be described in more detail. A signal called RF_REQUEST is generated by the WPAN station TX1 on the RF_REQUEST line 151 every time the WPAN station TX1 wishes to perform a transaction. The term 'transaction' means a number of consecutive TX/RX bursts (in the case of the WPAN station being a MASTER) or RX/TX bursts (in case of the WPAN station being a SLAVE). The RF_REQUEST signal has to be asserted high some time earlier than the radio is actually switched on and must remain high for the entire duration of the transaction. This signal is used by the WPAN station to indicate to the PTA that it has to do something at RF level. A signal called STATUS is generated by TX1 in parallel to the RF_REQUEST. For the first few microseconds this signal indicates with a 1 the fact that the transaction is a transaction with Priority and with a 0 the fact that the transaction has no priority. After this period the signal is held high during the TX part of the transaction. A signal called FREQ is generated by TX1 to inform that the current slot occupies a frequency also in use on the WLAN side. This signal is optional.

The arbiter 130 generates a signal called RF_CONFIRM, which is active low. In case the arbiter 130 wants to block TX1 from performing the requested transaction, it should assert this signal high before a predefined number of microseconds have passed from the moment RF_REQUEST was asserted high. If this happens, TX1 is instructed not to perform the requested transaction or at least not to perform the TX part of the transaction. TX1 may inhibit both TX and RX, or just the TX part of a transaction. The signals described above can be externally pulled down.

In accordance with an embodiment of the present invention, the protocol described above is modified to signal an additional piece of information. This information may be related to a link parameter of the link for which the request is being made. Preferably the additional information is an identifier (Link ID) of the Bluetooth link for which the request is being made. The Link ID can be signalled by any means available, e.g. on any line or communication path. For example it can be signalled on the FREQ line.

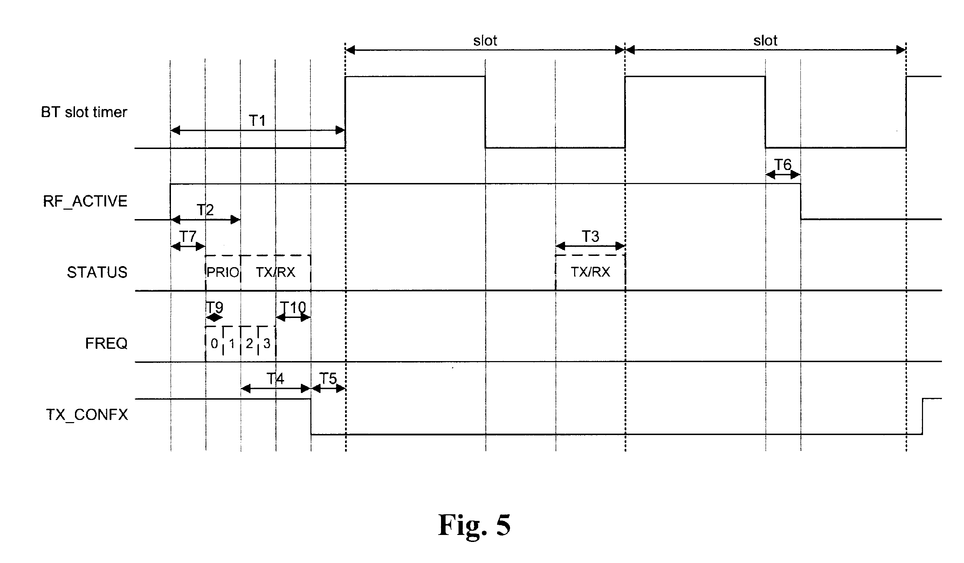

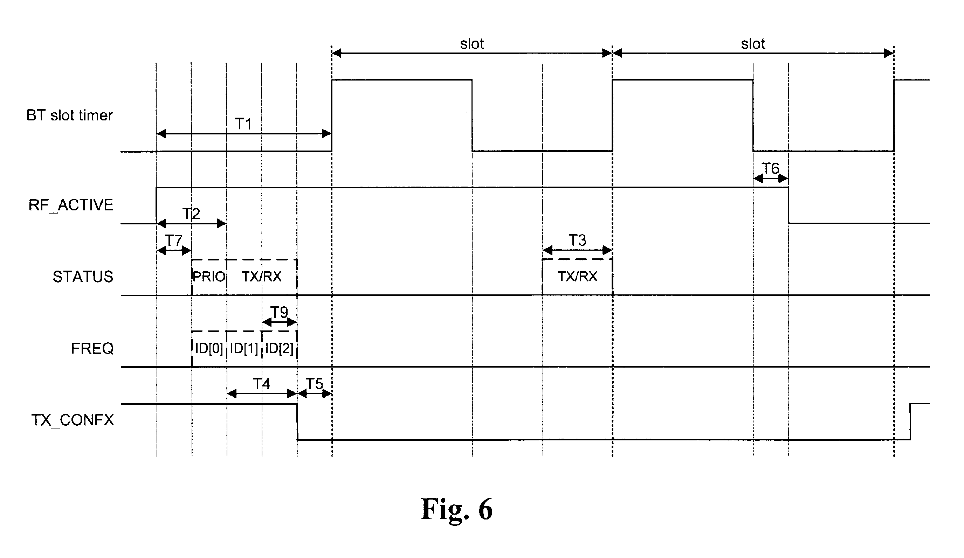

In an embodiment where the arbiter receives additional information from TX1 about each link, the arbiter can use the additional information such as the Link ID to assess which request should be granted access. The additional information stored in the lookup table 135 can supplement the simple two-level priority scheme of the conventional PTA protocol. Figure 5 shows a first way in which Link ID can be signalled. Conventionally, on the STATUS line, two bits are sent before the first slot start: one during T2-T1 and one during T4. A four-bit code, representing the Link ID, is sent on the FREQ line during T2+T4. The four-bit code can represent up to sixteen Link IDs. Figure 6 shows an alternative scheme, where a three-bit code is sent during a similar period. The three-bit code can represent up to eight Link IDs.

As described above, the PTA interface is used as a serial interface when the RF_REQUEST line is low. The following table presents one way of re-using the lines of the PTA interface to implement a serial interface:

| **Conventional PTA line** | **Direction** | **Serial interface line** | **Serial bus function** |
|---|---|---|---|
| RF_REQUEST | BT to WLAN | SERIAL_ACTIVE_N | low means serial link active |
| STATUS | bidirectional | SERIAL_CLK | Interface clock |
| FREQ | Bidirectional | SERIAL_DATA | Interface data |
| RF_CONFIRM | WLAN to BT when no transfer, bidirectional otherwise | SERIAL_REQorACK | Request to transfer from WLAN side. Active high. |

The 'master' is defined as TX1 (BT) and the 'slave' is defined as TX2 (WLAN). This it to ease the global management; indeed the TX1 (BT) side has the more data to transfer.

When no data transfer is executed, both SERIAL_CLK and SERIAL_DATA lines are high. A preferred scheme restricts any data transfer to 8 bytes (8 times 1 byte), with the 8 bytes comprising 32 bits of message type, and 32 bits of parameter. Each message of 8 bytes is split in 2 parts of 4 bytes. One is a type part and the other is a parameter part.

When data needs to be transferred from TX1 (BT) to TX2 (WLAN), TX1 starts generating the clock SERIAL_CLK and transmits data on SERIAL_DATA. At the end of the transfer, the clock is stopped. The signal SERIAL_REQorACK is used to acknowledge the transfer by the receiver TX2 (WLAN).

On the other hand, when data needs to be transferred from TX2 (WLAN) to TX1 (BT), the TX2 side first asserts the SERIAL_REQorACK signal. As acknowledgement, TX1 BT starts generating the clock SERIAL_CLK and receives data on SERIAL_DATA from WLAN side. At the end of the transfer, the clock is stopped. The signal SERIAL_REQorACK is used to acknowledge the transfer by the receiver (TX1).

It can be seen that, in this scheme, the signal SERIAL_REQorACK has two different purposes: to request a transfer from WLAN; and to acknowledge any transfers (from BT or WLAN).

The details of the physical layer of the serial interface are open to implementation and are not considered a limiting feature of the present invention. Features of existing 2-wire protocols, such as I²C can be used. However, when compared to the I²C specification, the following differences exist:
- no pull-up resistors need be used - to reduce cost and complexity;
- there is no address phase, as there is only a master and a slave connected to the interface;
- an extra request signal for the WLAN slave to request a transfer can be used;
- the same signal is used to acknowledge the transfer.

The serial link implemented inside WLAN device can be used on top of a PTA algorithm inside the WPAN device. The selection between the algorithms can be done by using the rf_request signal. When rf_request is low, the algorithm inside WLAN device is active and when it is high, the logic inside the WPAN device is active. To do the multiplexing of the signals, the signals of the WPAN device are routed to the WLAN device and they are muxed with internally generated signals inside the WLAN device by looking to the value of rf_request.

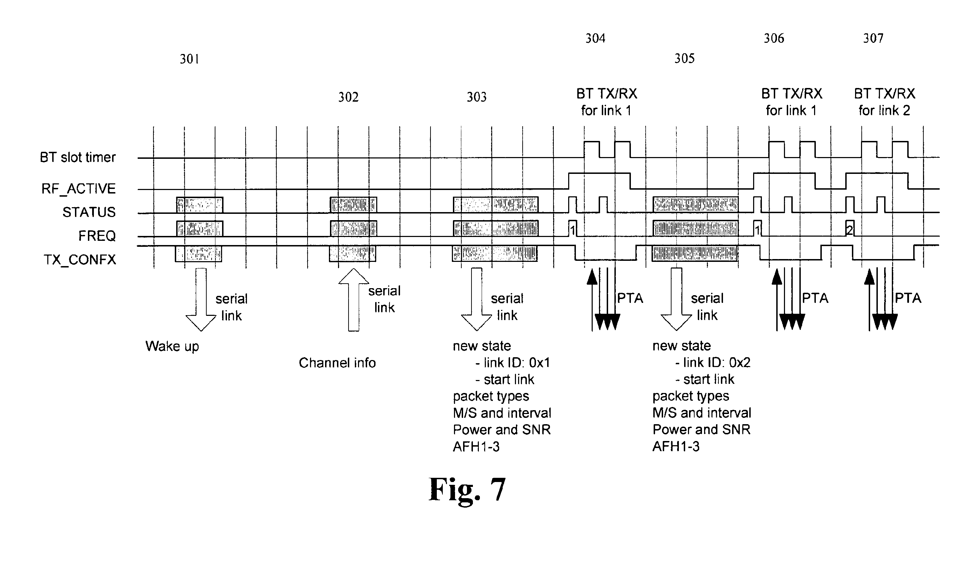

Figure 7 shows an example of how the four-line PTA interface can be used over a period of time. During periods 301, 303, 305 information is sent from TX1 to TX2, e.g. via the arbiter in TX2. During period 302 information is sent from TX2 to TX1, i.e. via the arbiter of TX2. At times 304, 306, 307 TX1 uses the PTA interface to signal that it intends to transmit/receive in the shared RF band. This signalling comprises raising a signal on the RF_ACTIVE line, signalling the priority of the transmission on the STATUS line, and signalling the ID of the link on the FREQ line. At other times, the interface is unused. The signal TX_CONFX is high when it is blocking the TX1 (WPAN, e.g. BT) transaction. When it is low it grants the TX1 request for a transaction.

The following gives further detail of the signalling scheme as an example only. This is based on the I²C specification (v.2.1, January 2000) unless explicitly mentioned. The present invention is not limited to the I²C specification.

### Bit transfer

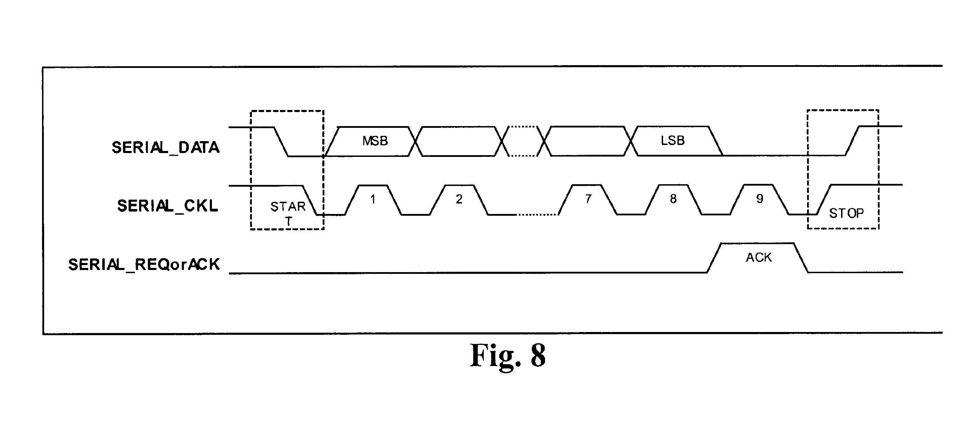

The data on the DATA line must be stable during the HIGH period of the clock. The HIGH or LOW state of the data line can only change when the clock signal on the CLK line is LOW. Unique situations arise which are defined as START (S) and STOP (P) conditions (see Figure 8). A HIGH to LOW transition on the DATA line while CLK is HIGH is one such unique case. This situation indicates a START condition. A LOW to HIGH transition on the DATA line while CLK is HIGH defines a STOP condition. START and STOP conditions are always generated by the master. The bus is considered to be busy after the START condition. The bus is considered to be free again a certain instead of a STOP condition. In this respect, the START (S) and repeated START (Sr) conditions are functionally identical.

### Transferring data bytes

The I²C specification allows read and write operations by the master. This is differentiated in the address phase. It is allowed in implementations in accordance with embodiments of the present invention, not to implement the address phase described in the I²C specification. So only write operations are allowed. Data bytes can be transferred in one of three ways: (i) by the BT (TX1) side; (ii) by the WLAN (TX2) side; (iii) by the WLAN (TX2) side on request of the BT (TX1) side.

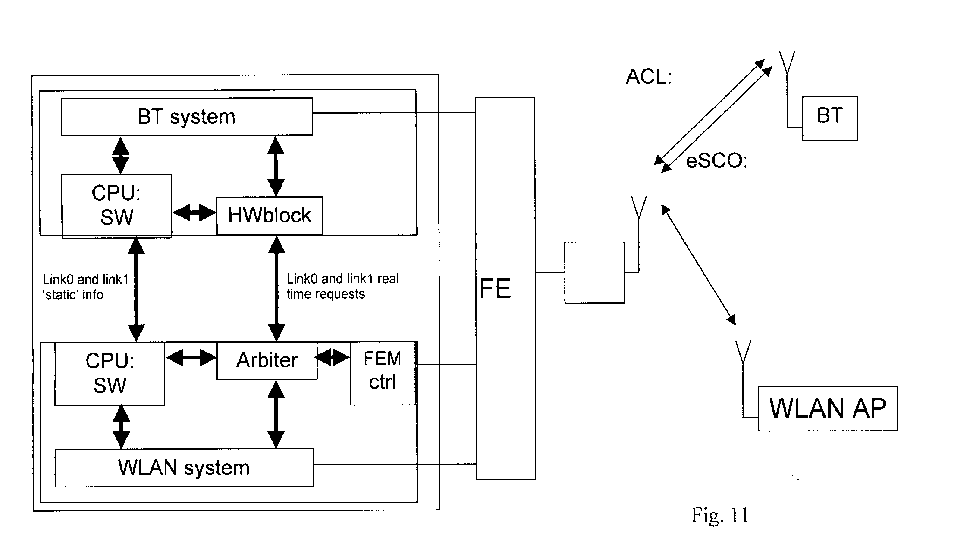

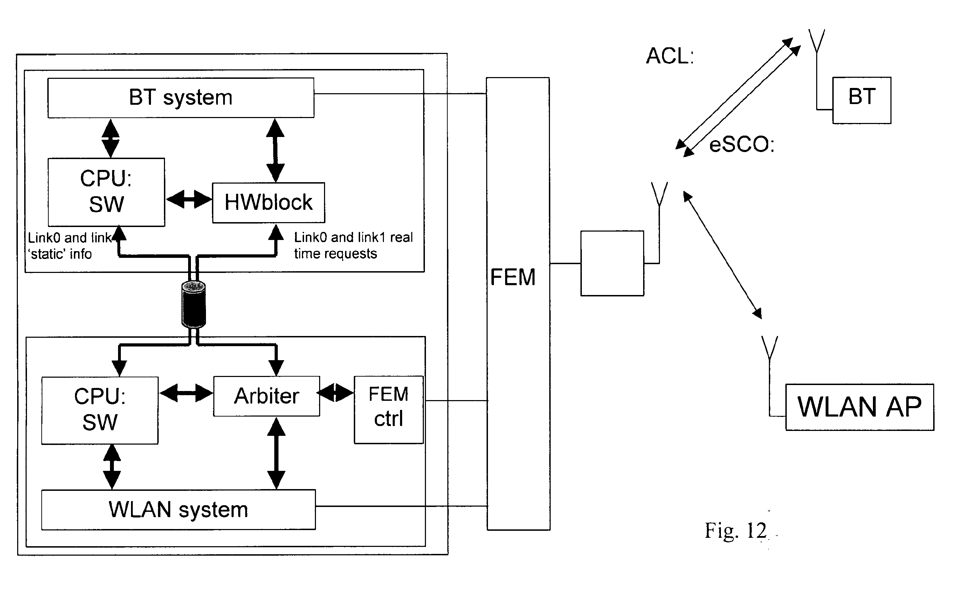

Figs. 11 and 12 show a first and a second wireless device (WPAN (BT) and WLAN) placed side by side and sharing a common antenna, e.g. on a common PCB.

As shown schematically in Figs. 11 and 12, the exchange of quasi-static information can be made over the serial link between the two CPU's of the first and second wireless apparatus, e.g. between the WPAN and the WLAN devices. The real time information is transferred between the WPAN device and the WLAN via a hardware block (HW) in the WPAN device (BT) and the arbiter in the WLAN. The CPU of Figs. 11 and 12 may include a microprocessor such as an Intel Pentium microprocessor or may be an embedded processor, e.g. an ARM processor core as described in "ARM, System-on-chip architecture" by Steve Furber, Addison-Wiley, 2nd edition, 2000, e.g. as a VLSI chip around an embedded microprocessor such as an ARM7TDMI core designed by ARM Ltd., UK which may be synthesized onto a single chip. The CPU may be a programmable digital logic device such as a Programmable Array Logic (PAL), a Programmable Logic Array, a Programmable Gate Array, especially a Field Programmable Gate Array (FPGA) or any other similar processing engine.

The present invention also includes software for performing any of the methods of the present invention. In particular the present invention provides software having code segments for implementing a method of interfacing a first wireless transceiver apparatus (for operating in a part of the RF spectrum which is shared with a co-located second wireless transceiver apparatus) to an arbitration entity which arbitrates access to the shared part of the RF spectrum between the first wireless transceiver apparatus and the second wireless transceiver apparatus when implemented on a processing engine. The software is adapted to use the arbitration interface to signal time periods when a wireless transceiver unit of one of the first and second wireless transceiver apparatus is operational, or requests to be operational, and to use the arbitration interface to signal data about the first wireless transceiver apparatus during other time periods.

The present invention includes software having code segments that control receipt of signalling over an arbitration interface during time periods when a wireless transceiver unit of one of a first wireless transceiver apparatus and a second wireless transceiver apparatus is operational, or requests to be operational, and to control receipt of data about the first wireless transceiver apparatus or the second wireless transceiver apparatus during other time periods.

### (i) Transfer from BT side

Every byte put on the DATA line can be 8-bits long. The number of bytes that can be transmitted per transfer can be unrestricted. Each byte is preferably followed by an acknowledge bit. Data is transferred with the most significant bit (MSB) first (see Figure 8). Preferably, it is not allowed for the WLAN slave to force the BT master in a wait state.

Data transfer with acknowledge can be made obligatory. The acknowledge-related clock pulse (9^{th} clock pulse) is generated by the master. The acknowledge ACK is generated by the receiver on the SERIAL_REQorACK line pulse so that it remains stable HIGH during the HIGH period of this clock pulse.

If a slave-receiver does not acknowledge the data (e.g. cannot receive any more data bytes), the master must abort the full transfer of 8 bytes. The slave does not generate the pulse HIGH on the SERIAL_REQorACK line - and the master generates a STOP or a repeated START condition to re-transmit the full 8 bytes.

### (ii) Transfer from WLAN side

Data transfers initiated by WLAN side (TX1, slave side) are similar to the ones originating from the BT master, except that they are preceded by a request from the slave side by asserting HIGH the SERIAL_REQorACK line. The line stays HIGH until the master asserts a START condition. Immediately after having generated the START condition, the bus is considered as busy. It means that the master must be able to receive data and the slave must be able to send them. The driver of the SERIAL_REQorACK line is also swapped between slave and master so that the master can generate the ACK. At the end of the transfer the master takes back control of the data bus to generate the STOP or repeated START condition.

### (iii) Transfer from WLAN side on request of BT side

If the address phase of a normal I²C transfer is not implemented, it is not possible for BT side to directly read information on WLAN side. In other words, only write operations are possible. So, if the BT side (TX1) wants to access information on the WLAN side (TX2) at another moment than foreseen by WLAN, it must first issue a request command. The WLAN side (TX2) will then answer with a normal transfer initiated from its side as described at point (ii) above.

The invention is not limited to the embodiments described herein, which may be modified or varied without departing from the scope of the invention.

## Claims

1. A first wireless transceiver apparatus for operating in a part of the RF spectrum which is shared with a co-located second wireless transceiver apparatus, the first wireless transceiver apparatus comprising:
a wireless transceiver unit;
an arbitration interface for interfacing with an arbitration entity which arbitrates access to the shared part of the RF spectrum between the first wireless transceiver apparatus and the second wireless transceiver apparatus;
wherein the arbitration interface is adapted to signal time periods when the wireless transceiver unit is operational, or requests to be operational;
and wherein the arbitration interface is adapted to signal data about the first wireless transceiver apparatus during other time periods.

2. A wireless transceiver apparatus according to claim 1, wherein the arbitration interface comprises two arbitration interfacing means for interfacing with an arbitration entity which arbitrates access to the shared part of the RF spectrum between the first wireless transceiver apparatus and the second wireless transceiver apparatus;
wherein a first arbitration interfacing means is adapted to signal time periods when the wireless transceiver unit is operational, or requests to be operational;
and wherein a second arbitration interfacing means is adapted to signal data about the first wireless transceiver apparatus during other time periods.

3. A wireless transceiver apparatus according to claim 1 or 2 wherein the transceiver is capable of supporting a plurality of different wireless links; and wherein at least some items of the data carried over the arbitration interface are each associated with an identifier of one of the wireless links.

4. A wireless transceiver apparatus according to claim 3 which is arranged to send an identifier of one of the wireless links as part of the request for the wireless transceiver unit to be operational.

5. A wireless transceiver apparatus according to any one of the preceding claims wherein the data comprises at least one of: state of a wireless link; packet type sent over a wireless link; power; SNR; Frequency Hopping Scheme.

6. A wireless transceiver apparatus according to any one of the preceding claims wherein the arbitration interface comprises a first line (RF_Active) which the first wireless transceiver apparatus can use to signal that the wireless transceiver unit is operational, or requests to be operational, and wherein the arbitration interface is used to signal data about the first wireless transceiver apparatus during periods when the first line indicates that the wireless transceiver unit is not operational, or not requesting to be operational.

7. A wireless transceiver apparatus according to any one of the preceding claims wherein a sub-set of the lines of the arbitration interface are used to implement a serial interface for signalling the data during said other time periods.

8. A wireless transceiver apparatus according to claim 7 wherein one of the sub-set of lines of the arbitration interface is used as a serial clock line, and another of the sub-set of lines of the arbitration interface is used as a serial data line.

9. A wireless transceiver apparatus according to claim 7 or 8 wherein one of the sub-set of lines of the arbitration interface is used both: (i) to request a transfer of data from the second wireless transceiver apparatus; and (ii) to acknowledge a data transfer.

10. An arbitration entity for arbitrating access to RF spectrum which is shared between a first wireless transceiver apparatus and a second wireless transceiver apparatus which is co-located with the first wireless transceiver apparatus, the arbitration entity comprising:
an arbitration interface for interfacing with the first wireless transceiver apparatus and the second wireless transceiver apparatus; wherein the arbitration interface is adapted to signal time periods when a wireless transceiver unit of one of the wireless transceivers is operational, or requests to be operational, and wherein the arbitration interface is adapted to signal data about the first wireless transceiver apparatus or the second wireless transceiver apparatus during other time periods.

11. An arbitration entity according to claim 10, wherein the arbitration interface comprises two arbitration interfacing means for interfacing with an arbitration entity which arbitrates access to the shared part of the RF spectrum between the first wireless transceiver apparatus and the second wireless transceiver apparatus;
wherein a first arbitration interfacing means is adapted to signal time periods when the wireless transceiver unit is operational, or requests to be operational;
and wherein a second arbitration interfacing means is adapted to signal data about the first wireless transceiver apparatus during other time periods.

12. An arbitration entity according to claim 10wherein the first wireless transceiver apparatus is capable of supporting a plurality of different wireless links and wherein at least some items of the data received over the arbitration interface are each associated with an identifier of one of the wireless links, the arbitration entity being arranged to store the data and to use the data to arbitrate requests for accessing the shared RF spectrum.

13. An arbitration entity according to claim 12 which is arranged to receive an identifier of one of the wireless links as part of the request for the first wireless transceiver unit to be operational.

14. Apparatus comprising a combination of a first wireless transceiver apparatus according to any one of claims 1 to 9 and an arbitration entity according to any one of claims 10 to 13.

15. Apparatus according to claim 14 further comprising a second wireless transceiver apparatus for operating in a part of the RF spectrum which is shared with the first wireless transceiver apparatus.

16. Apparatus according to any one of the preceding claims wherein the first wireless transceiver apparatus is a Wireless Personal Area Network (WPAN) apparatus.

17. Apparatus according to claim 16 wherein the first wireless transceiver apparatus is an IEEE 802.15.1 (Bluetooth™) apparatus.

18. Apparatus according to any one of the preceding claims wherein the second wireless transceiver apparatus is a Wireless Local Area Network (WLAN) apparatus.

19. A method of interfacing a first wireless transceiver apparatus for operating in a part of the RF spectrum which is shared with a co-located second wireless transceiver apparatus, to an arbitration entity which arbitrates access to the shared part of the RF spectrum between the first wireless transceiver apparatus and the second wireless transceiver apparatus;
the method comprising using the arbitration interface to signal time periods when a wireless transceiver unit of one of the first and second wireless transceiver apparatus is operational, or requests to be operational, and using the arbitration interface to signal data about the first wireless transceiver apparatus during other time periods.

20. A method of interfacing an arbitration entity to a first wireless transceiver apparatus and a second wireless transceiver apparatus which is co-located with the first wireless transceiver apparatus, the method comprising:
receiving signalling over an arbitration interface during time periods when a wireless transceiver unit of one of the first wireless transceiver apparatus and second wireless transceiver apparatus is operational, or requests to be operational, and
receiving data about the first wireless transceiver apparatus or the second wireless transceiver apparatus during other time periods.

21. A method according to claim 20 wherein the first wireless transceiver apparatus is capable of supporting a plurality of different wireless links and wherein at least some items of the data received over the arbitration interface are each associated with an identifier of one of the wireless links, the method further comprising storing the data and using the data to arbitrate requests for accessing the shared RF spectrum.

22. Software for performing the method according to any one of claims 19 to 21.

23. A first wireless transceiver apparatus for operating in a part of the RF spectrum which is shared with a co-located second wireless transceiver apparatus, the first wireless transceiver apparatus comprising:
a wireless transceiver unit which is capable of supporting a plurality of different wireless links;
an arbitration interface for interfacing with an arbitration entity which arbitrates access to the shared part of the RF spectrum between the first wireless transceiver apparatus and the second wireless transceiver apparatus;
wherein the first wireless transceiver apparatus is arranged to signal over the arbitration interface to request access to the shared RF spectrum and is further arranged to send an identifier of the wireless link for which the request is being made.

24. A wireless transceiver apparatus according to claim 23,
wherein the arbitration interface comprises two arbitration interfacing means for interfacing with an arbitration entity which arbitrates access to the shared part of the RF spectrum between the first wireless transceiver apparatus and the second wireless transceiver apparatus;
wherein a first arbitration interfacing means is adapted to signal time periods when the wireless transceiver unit is operational, or requests to be operational;
and wherein a second arbitration interfacing means is adapted to signal data about the first wireless transceiver apparatus during other time periods.
